# EUROPEAN PATENT APPLICATION

(11) **EP 4 764 970 A1**
(43) Date of publication of application: **24.06.2026**
(21) Application number: 25220535.6
(22) Date of filing: 03.12.2025
(51) Int. Cl.: G06N 10/20, G06N 10/80, G06N 10/70

(54) **REAL-TIME QUANTUM GATE TRANSLATION BASED ON A QUANTUM GATE ARCHITECTURE OF A QUANTUM COMPUTING SYSTEM**

(30) Priority: 17.12.2024 US 202418984209
(71) Applicant: Red Hat, LLC, Raleigh, NC 27601 (US)
(72) Inventor: GRIFFIN, Leigh, Raleigh, 27601 (US); COADY, Stephen, Raleigh, 27601 (US)
(74) Representative: Murgitroyd & Company

(57) **Abstract**

A quantum instruction file (QIF) including instructions operable to manipulate a qubit is accessed. A quantum gate record that contains information relating to quantum gates implemented by a quantum computing system on which the QIF is to be executed is accessed. A quantum gate operation to manipulate the qubit is identified in the QIF. The QIF is modified based on the quantum gate record to generate a modified QIF. The modified QIF is caused to be scheduled for execution on the quantum computing system.

## Description

### TECHNICAL FIELD

The disclosure is directed to a method executed by a computing system.

### BACKGROUND

Unlike conventional classical computing systems, quantum computing systems designed by different entities may have vastly different underlying hardware architectures.

### SUMMARY

The examples disclosed herein implement real-time quantum gate translation based on a quantum gate architecture of a quantum computing system environment.

According to a first aspect of the disclosure, there is provided a method comprising:
accessing, by a computing system, a quantum instruction file, QIF, comprising instructions operable to manipulate a qubit;
accessing, by the computing system, a first quantum gate record that contains information relating to quantum gates implemented by a first quantum computing system on which the QIF is to be executed;
identifying, by the computing system, in the QIF a quantum gate operation to manipulate the qubit;
modifying, by the computing system, the QIF based on the first quantum gate record to generate a first modified QIF; and
causing, by the computing system, the first modified QIF to be scheduled for execution on the first quantum computing system.

The method may further comprise: prior to causing the first modified QIF to be scheduled for execution on the first quantum computing system, causing, by the computing system, the first modified QIF to be executed by a quantum simulator; accessing, by the computing system, output information generated based on the first modified QIF being executed by the quantum simulator; and, based on the output information, causing the first modified QIF to be scheduled for execution on the first quantum computing system. The output information may comprise a log file.

Modifying the QIF based on the first quantum gate record to generate the first modified QIF may comprise replacing a programming instruction identified in the QIF with a different programming instruction in the first modified QIF.

Modifying the QIF based on the first quantum gate record to generate the first modified QIF may comprise adding a quantum environment instruction to the first modified QIF that identifies a desired quantum environment characteristic. The desired quantum environment characteristic may comprise a particular error correction algorithm or a particular noise threshold.

Modifying the QIF based on the first quantum gate record to generate the first modified QIF may comprise replacing a quantum gate operation identified in the QIF with a plurality of quantum gate operations in the first modified QIF that implements a same result as the quantum gate operation identified in the QIF.

The method may further comprise determining, by the computing system, that the QIF is to be executed on the first quantum computing system of a plurality of quantum computing systems. Accessing the first quantum gate record may comprise, in response to determining that the QIF is to be executed on the first quantum computing system, selecting the first quantum gate record from a plurality of quantum gate records, each quantum gate record corresponding to one of the plurality of quantum computing systems.

The method may further comprise: subsequent to causing the first modified QIF to be scheduled for execution on the first quantum computing system, accessing, by the computing system, the QIF; accessing, by the computing system, a second quantum gate record that contains information relating to quantum gates implemented by a second quantum computing system on which the QIF is to be executed; identifying, by the computing system, in the QIF the quantum gate operation to manipulate the qubit; modifying, by the computing system, the QIF based on the second quantum gate record to generate a second modified QIF, wherein the second modified QIF is different from the first modified QIF; and causing, by the computing system, the second modified QIF to be scheduled for execution on the second quantum computing system.

According to a second aspect of the disclosure there is provided a computing system comprising a memory, and a processor device coupled to the memory configured to:
access a quantum instruction file (QIF) comprising instructions operable to manipulate a qubit;
access a first quantum gate record that contains information relating to quantum gates implemented by a first quantum computing system on which the QIF is to be executed;
identify in the QIF a quantum gate operation to manipulate the qubit;
modify the QIF based on the first quantum gate record to generate a first modified QIF; and
cause the first modified QIF to be scheduled for execution on the first quantum computing system.

The processor device may be further configured to: prior to causing the first modified QIF to be scheduled for execution on the first quantum computing system, cause the first modified QIF to be executed by a quantum simulator; access output information generated based on the first modified QIF being executed by the quantum simulator; and, based on the output information, cause the first modified QIF to be scheduled for execution on the first quantum computing system. The output information may comprise a log file.

The processor device may be configured to modify the QIF based on the first quantum gate record to generate the first modified QIF by replacing a programming instruction identified in the QIF with a different programming instruction in the first modified QIF.

The processor device may be configured to modify the QIF based on the first quantum gate record to generate the first modified QIF by adding a quantum environment instruction to the first modified QIF that identifies a desired quantum environment characteristic. The desired quantum environment characteristic may comprise a particular error correction algorithm or a particular noise threshold.

The processor device may be configured to modify the QIF based on the first quantum gate record to generate the first modified QIF by replacing a quantum gate operation identified in the QIF with a plurality of quantum gate operations in the first modified QIF that implements a same result as the quantum gate operation identified in the QIF.

The processor device may be further configured to determine, by the computing system, that the QIF is to be executed on the first quantum computing system of a plurality of quantum computing systems. Accessing the first quantum gate record may comprise, in response to determining that the QIF is to be executed on the first quantum computing system, selecting the first quantum gate record from a plurality of quantum gate records, each quantum gate record corresponding to one of the plurality of quantum computing systems.

The processor device may be further configured to: subsequent to causing the first modified QIF to be scheduled for execution on the first quantum computing system, access the QIF; access a second quantum gate record that contains information relating to quantum gates implemented by a second quantum computing system on which the QIF is to be executed; identify, in the QIF, the quantum gate operation to manipulate the qubit; modify the QIF based on the second quantum gate record to generate a second modified QIF, wherein the second modified QIF is different from the first modified QIF; and cause the second modified QIF to be scheduled for execution on the second quantum computing system.

According to a third aspect of the disclosure there is provided a non-transitory computer-readable storage medium that includes executable instructions which, when executed by a processor device, cause the processor device to:
access a quantum instruction file (QIF) comprising instructions operable to manipulate a qubit;
access a first quantum gate record that contains information relating to quantum gates implemented by a first quantum computing system on which the QIF is to be executed;
identify in the QIF a quantum gate operation to manipulate the qubit;
modify the QIF based on the first quantum gate record to generate a first modified QIF; and
cause the first modified QIF to be scheduled for execution on the first quantum computing system.

The instructions may further cause the processor device to: prior to causing the first modified QIF to be scheduled for execution on the first quantum computing system, cause the first modified QIF to be executed by a quantum simulator; access output information generated based on the first modified QIF being executed by the quantum simulator; and, based on the output information, cause the first modified QIF to be scheduled for execution on the first quantum computing system. The output information may comprise a log file.

The instructions may further cause the processor device to modify the QIF based on the first quantum gate record to generate the first modified QIF by replacing a programming instruction identified in the QIF with a different programming instruction in the first modified QIF.

The instructions may further cause the processor device to modify the QIF based on the first quantum gate record to generate the first modified QIF by adding a quantum environment instruction to the first modified QIF that identifies a desired quantum environment characteristic. The desired quantum environment characteristic may comprise a particular error correction algorithm or a particular noise threshold.

The instructions may cause the processor device to modify the QIF based on the first quantum gate record to generate the first modified QIF by replacing a quantum gate operation identified in the QIF with a plurality of quantum gate operations in the first modified QIF that implements a same result as the quantum gate operation identified in the QIF.

The instructions may further cause the processor device to determine, by the computing system, that the QIF is to be executed on the first quantum computing system of a plurality of quantum computing systems. Accessing the first quantum gate record may comprise, in response to determining that the QIF is to be executed on the first quantum computing system, selecting the first quantum gate record from a plurality of quantum gate records, each quantum gate record corresponding to one of the plurality of quantum computing systems.

The instructions may further cause the processor device to: subsequent to causing the first modified QIF to be scheduled for execution on the first quantum computing system, access the QIF; access a second quantum gate record that contains information relating to quantum gates implemented by a second quantum computing system on which the QIF is to be executed; identify, in the QIF, the quantum gate operation to manipulate the qubit; modify the QIF based on the second quantum gate record to generate a second modified QIF, wherein the second modified QIF is different from the first modified QIF; and cause the second modified QIF to be scheduled for execution on the second quantum computing system.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of an environment in which real-time quantum gate translation based on a quantum gate architecture of a quantum computing system can be practiced according to some implementations;
Figure 2 is a flowchart of a method for real-time quantum gate translation based on a quantum gate architecture of a quantum computing system according to some implementations;
Figure 3 is a block diagram of an environment in which real-time quantum gate translation based on a quantum gate architecture of a quantum computing system can be practiced according to other implementations;
Figure 4 is a simplified block diagram of the environment illustrated in Figure 1 according to one implementation; and
Figure 5 is a block diagram of a computing system suitable for implementing real-time quantum gate translation based on a quantum gate architecture of a quantum computing system can be practiced according to some implementations.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples and claims are not limited to any particular sequence or order of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Unlike conventional classical computing systems, quantum computing systems designed by different manufacturers may have vastly different underlying hardware quantum gate architectures. For example, there exists today superconducting quantum computing systems, photonic quantum computing systems, neutral atom quantum computing systems, trapped ion quantum computing systems, quantum dot quantum computing systems, and more. Typically a quantum program that manipulates qubits is written in a human readable language, such as Python, Qiskit, Q# and the like. The quantum program may be compiled or translated, and the resulting qubit operations are implemented at a hardware level by various quantum gate operations. Different quantum computing systems implement different quantum gate operations, and some quantum computing systems implement certain gate operations more efficiently than others. Moreover, an equivalent qubit manipulation may be implemented by different quantum gate operations even on the same quantum computing systems. Certain quantum gate operations may be more desirable than others given a certain quantum environment characteristic, such as a particular noise threshold or the use of a particular error correction algorithm.

Prior to executing a quantum instruction file (QIF) on a quantum computing system it may be desirable to modify the QIF based on knowledge of that particular quantum computing system's gate operations. For example, for a particular quantum computing system it may be desirable to replace certain QIF instructions that implement particular quantum gate operations with different QIF instructions that perform functionally equivalent qubit manipulations, but utilize different quantum gate operations that are more efficient, generate less noise or heat, or will perform better, such as more efficiently or with a lower error probability due to current environmental conditions, or the like. Alternatively or additionally, it might be useful for the quantum computing system to ensure a particular quantum environment characteristic is met, or configured, for the QIF based on the particular quantum gate operations that will be implemented by virtue of executing the QIF. In such situations, it may be beneficial to annotate (e.g., modify) the QIF with information that may be subsequently used by the quantum computing system to ensure the particular quantum environment characteristic is met, or configured, for execution of the QIF.

Similarly, in a distributed quantum computing environment where a QIF may be sent to a particular quantum computing system of a plurality of different quantum computing systems based on some criterion, such as a load-balancing criterion, or the like, the execution of the QIF may benefit if specific knowledge of that particular quantum computing system gate operations was known, for the reasons discussed above. Thus, if the QIF is to be executed by a first quantum computing system it may be desirable to alter the QIF's instructions in a first manner, and if to be executed by a second quantum computing system it may be desirable to alter the QIF's instructions in a second, different manner, based on the difference in the gate operations of the first and second quantum computing systems.

The examples disclosed herein implement real-time quantum gate translation based on a quantum gate architecture of a quantum computing system environment. A computing system accesses a QIF that includes instructions operable to manipulate one or more qubits. The computing system accesses a quantum gate record that contains information relating to quantum gates implemented by a quantum computing system on which the QIF is to be executed. The computing system identifies, in the QIF, a quantum gate operation to manipulate the qubit. The computing system modifies the QIF based on the quantum gate record to generate a modified QIF, and schedules the modified QIF for execution on the quantum computing system. Among other advantages, the examples herein improve the quantum computing system by ensuring that the most efficient, or most desirable, quantum gate operations are utilized to accomplish a desired qubit manipulation.

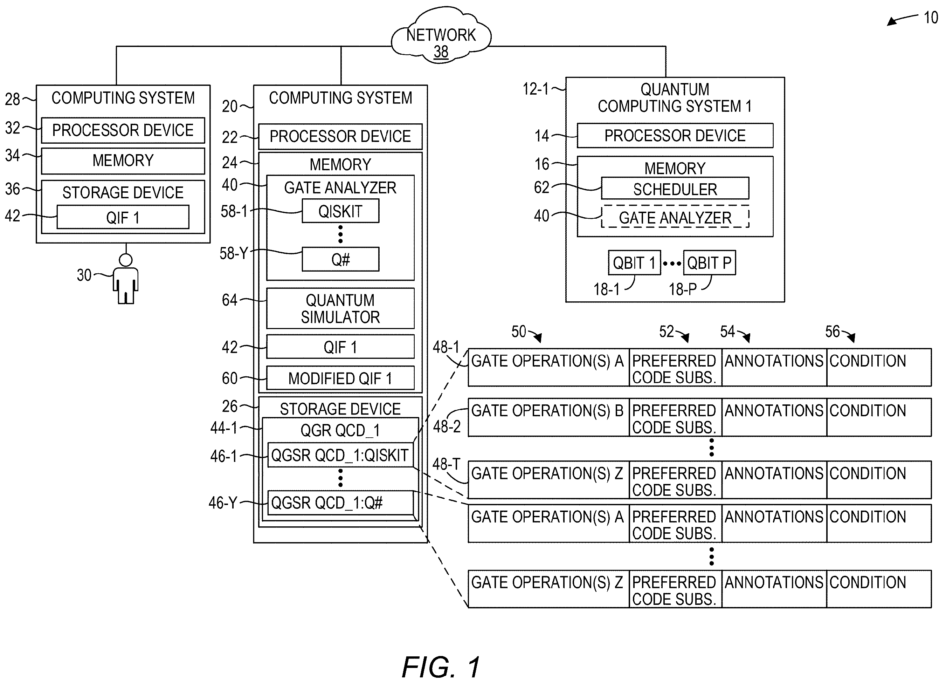

Figure 1 is a block diagram of an environment 10 in which real-time quantum gate translation based on a quantum gate architecture of a quantum computing system environment can be practiced according to some implementations. The environment 10 includes a quantum computing system 12-1 that includes a processor device 14 and a memory 16. The quantum computing system 12-1 operates in a quantum environment but can operate using classical computing principles or quantum computing principles. When using quantum computing principles, the quantum computing system 12-1 performs computations that utilize quantum-mechanical phenomena, such as superposition and entanglement. The quantum computing system 12-1 may operate under certain environmental conditions, such as at or near 0° Kelvin. When using classical computing principles, the quantum computing system 12-1 utilizes binary digits that have a value of either 1 or 0. The quantum computing system 12-1 implements a plurality of quantum bits ("qubits") 18-1 - 18-P.

The environment 10 includes a computing system 20 that includes a processor device 22 and a memory 24. The computing system 20 includes, or is communicatively coupled to, a storage device 26. The environment 10 may include a computing system 28 associated with a user 30. The computing system 28 may include a processor device 32, a memory 34 and storage device 36. The computing systems 20, 28 and the quantum computing system 12-1 may communicate with one another via one or more networks 38.

The computing system 20 may be a classical computing system or a quantum computing system. The computing system 20 includes a gate analyzer 40 that implements certain functionality as will be described in greater detail below. While the gate analyzer 40 is illustrated as executing on the computing system 20, in other implementations the gate analyzer 40 may execute on the quantum computing system 12-1 and the environment 10 may not include the computing system 20.

Because the gate analyzer 40 is a component of the computing system 20, functionality implemented by the gate analyzer 40 may be attributed to the computing system 20 generally. Moreover, in examples where the gate analyzer 40 comprises software instructions that program the processor device 22 to carry out functionality discussed herein, functionality implemented by the gate analyzer 40 may be attributed herein to the processor device 22. Similarly, in implementations where the gate analyzer 40 is a component of the quantum computing system 12-1, functionality implemented by the gate analyzer 40 may be attributed to the quantum computing system 12-1 generally. Moreover, in examples where the gate analyzer 40 comprises software instructions that program the processor device 14 to carry out functionality discussed herein, functionality implemented by the gate analyzer 40 may be attributed herein to the processor device 14.

In this example, the user 30 generates a quantum instruction file (QIF) 42 that is written in a quantum programming, language, such as by way of non-limiting example, Python, Qiskit, C#, or the like. The QIF 42 includes instructions (e.g., programming instructions) that are operable to manipulate one or more qubits. The user 30 interacts with the computing system 28 to cause the QIF 42 to be sent to the computing system 20.

The gate analyzer 40 accesses the QIF 42. The gate analyzer 40 determines that the QIF 42 is to be executed on the quantum computing system 12-1. In some implementations the gate analyzer 40 may make this determination because the quantum computing system 12-1 is the only quantum computing system 12-1 known to the gate analyzer 40. In other implementations the gate analyzer 40 may be operable to cause the QIF 42 to be executed on any of a plurality of quantum computing systems. In such implementations the particular quantum computing system on which the QIF 42 is to be executed may be communicated in information that accompanied the QIF 42. In other implementations the gate analyzer 40 may determine which quantum computing system of a plurality of quantum computing systems based on a criterion, such as a load balancing criterion, by way of non-limiting example.

In response to determining that the QIF 42 is to be executed on the quantum computing system 12-1, the gate analyzer 40 selects a quantum gate record 44-1 that corresponds to the quantum computing system 12-1. The quantum gate record 44-1 contains information relating to quantum gates implemented by the quantum computing system 12-1. The information may include certain preferable programming instructions that implement preferable gate translation operations than would otherwise be implemented based on the existing programming instructions in the QIF 42. The preferable programming instructions may accomplish the same qubit manipulations as those identified in the QIF 42 but utilize different quantum gate operations that, given the architecture of the quantum computing system 12-1 and/or certain real-time environment conditions of the quantum computing system 12-1, such as real-time heat and/or noise conditions of the quantum computing system 12-1, are preferable to the gate operations that would otherwise be implemented by the QIF 42. The information may also include annotation information that is to be added to the QIF 42 and used by the quantum computing system 12-1 prior to or during execution of the QIF 42. Such information does not alter the gate operations or execution of the QIF 42 but rather is used by the quantum computing system 12-1 to ensure conditions are appropriate for execution of the QIF 42. The information may also include real-time conditions that dictate which programming instructions are preferred based on the current real-time conditions of the quantum computing system 12-1.

The quantum gate record 44-1 may be maintained in any desired format. In one implementation, the quantum gate record 44-1 may include one or more subrecords 46-1 - 46-Y (generally, subrecords 46), each subrecord 46 corresponding to a particular quantum programming language of a plurality of different quantum programming languages. In this example, the subrecord 46-1 corresponds to the Qiskit quantum programming language and the subrecord 46-Y corresponds to the Q# quantum programming language.

The subrecord 46-1 comprises a plurality of entries 48-1 - 48-T (generally, entries 48). Each entry 48 may include one or more fields, such as a field 50 that identifies certain quantum gate operations that will be performed by the QIF 42 absent any modifications. A field 52 identifies preferred programming instruction replacements that would implement preferable quantum gate operations that implement a same result as the quantum gate operations derived from the QIF 42. A field 54 may identify annotations that comprise, for example, quantum environment instructions that are to be added to the QIF 42 and that will be used by the quantum computing system 12-1 prior to or during execution of the QIF 42 to ensure a desired quantum environment characteristic, such as a particular error correction level or algorithm.

The annotations may take any suitable form, such as comments or the like. A field 56 may identify a real-time condition that, if met, indicates that the respective entry 48 is to be implemented, and if not met, ignored. Some of the entries 48 may contain one or more of the fields 54 and 56 or may not contain either of the fields 54 and 56.

The gate analyzer 40 may determine the quantum programming language used in the QIF 42. The gate analyzer 40 may make this determination in any suitable manner, such as based on a prefix of the file name of the QIF 42, or based on information provided in conjunction with the QIF 42, or based on an analysis of the contents of the QIF 42. Based on the particular programming language, a particular module 58-1 - 58-Y (generally, modules 58) that has been manufactured to process quantum programming instructions of the particular quantum programming language may analyze the QIF 42. It is noted that because the modules 58 are components of the gate analyzer 40, functionality implemented by the modules 58 may be attributed to the gate analyzer 40 generally.

In this example, because the QIF 42 was written in the Qiskit quantum programming language, the module 58-1 processes the QIF 42. The module 58-1 is designed to identify, based on programming instructions written in the Qiskit quantum programming language, quantum gate operations that will be executed to perform a desired manipulation on one or more of the qubits 18. The analysis may involve the generation of executable operators to determine the particular quantum gate operations that would be implemented on the quantum computing system 12-1. The module 58-1 accesses the subrecord 46-1 and for each potential gate operation or set of gate operations determines, based on the field 50, if there is an entry 48 that corresponds to the gate operation or set of gate operations.

In this example, assume that the module 58-1 determines that the field 50 of the entry 48-1 identifies a particular gate operation that matches a gate operation that the module 58-1 determines is to be executed. For purposes of illustration, assume that the entry 48-1 does not contain fields 54 or 56. The module 58-1 accesses the field 52 that identifies different quantum programming instructions in Qiskit that will implement the same manipulations but use different quantum gates, or use a different sequence of quantum gates that is preferable for the quantum computing system 12-1 than those that would be executed by the existing quantum programming instructions in the QIF 42.

The module 58-1 modifies the QIF 42 based on the quantum gate record 44-1 to generate a modified QIF 60. In particular, in this example, the module 58-1 replaces one or more programming instructions identified in the QIF 42 with one or more different programming instructions in the modified QIF 60.

As another example, assume that the module 58-1 determines that the field 50 of the entry 48-2 identifies another gate operation that matches a gate operation that the module 58-1 determines is to be executed. The module 58-1 accesses the field 52 that identifies different quantum programming instructions in Qiskit that will implement the same manipulations but use different quantum gates, or use a different sequence of quantum gates that is preferable for the quantum computing system 12-1 than those that would be executed by the existing quantum programming instructions. The module 58-1 replaces one or more programming instructions identified in the QIF 42 with one or more different programming instructions in the modified QIF 60. In this example the field 54 of the entry 48-2 includes an annotation comprising a quantum environment instruction. In particular, the quantum gate operations that will be implemented by the programming instructions identified in the field 52 may require a certain level of error correction, or should be executed only under a certain temperature. The quantum environment instruction instructs the quantum computing system 12-1 to implement the certain level of error correction, or to execute the modified QIF 60 only under the certain temperature.

The module 58-1 adds the annotation identified in the field 52 to the modified QIF 60. The annotations are essentially instructions that will be used by the quantum computing system 12-1 and do not otherwise change the actual operators and operands that will be performed based on the modified QIF 60. The annotations may be added, for example, using a particular comment character that indicates that the line or lines in the QIF 60 bearing the annotation are merely comments and are not programming instructions.

As another example, assume that the module 58-1 determines that the field 50 of the entry 48-T identifies another gate operation that matches a gate operation that the module 58-1 determines is to be executed. The module 58-1 accesses the field 52 that identifies different quantum programming instructions in Qiskit that will implement the same manipulations but use different quantum gates, or use a different sequence of quantum gates that is preferable for the quantum computing system 12-1 than those that would be executed by the existing quantum programming instructions. In this example, the entry 48-T includes the field 54. The module 58-1 accesses the field 54 which identifies a condition, which if true, indicates that the programming instruction substitution identified in the field 52 of the entry 48-T should be made, and if not, then should be ignored. In this example, the condition identifies a noise level. The module 58-1 sends a message to the quantum computing system 12-1 to obtain a current, real-time noise level associated with the quantum computing system 12-1. The module 58-1 compares the current noise level with the noise level identified in the field 54 and determines that the condition is false. In response, the module 58-1 does not replace any programming instruction(s) in the QIF 42 with those identified in the field 52 of the entry 48-T.

-Subsequent to processing the QIF 42 in the manner described above, the gate analyzer 40 may cause the modified QIF 60 to be scheduled for execution on the quantum computing system 12-1. In particular, the gate analyzer 40 may send the modified QIF 60 to a scheduler 62 which, in turn, schedules the modified QIF 60 for execution on the quantum computing system 12-1.

In some implementations, the gate analyzer 40 may, prior to causing the modified QIF 60 to be scheduled for execution on the quantum computing system 12-1, cause the modified QIF 60 to be executed by a quantum simulator 64. In particular, the gate analyzer 40 may instruct the quantum simulator 64 to execute the modified QIF 60. The quantum simulator 64 may then initiate the modified QIF 60 to simulate an execution of the modified QIF 60. The simulation of the modified QIF 60 may result in the generation of output information, such as a log file, error messages, a success message, or the like. The gate analyzer 40 may access the output information and, based on the output information, perform some action. For example, the gate analyzer 40 may determine based on the output information that the modified QIF 60 implements identical functionality as the QIF 42, and in response cause the modified QIF 60 to be scheduled for execution on the quantum computing system 12-1. In another example, the gate analyzer 40 may determine, based on the output information, that the modified QIF 60 contains problems, and report the problem. For example, the gate analyzer 40 may send a message to the computing system 28 for presentation to the user 30 indicating that the modified QIF 60 contains problems.

For purposes of illustration, assume that the gate analyzer 40 sends the modified QIF 60 to the scheduler 62. The scheduler 62 analyzes the QIF 60 to determine if the QIF 60 contains any annotations. If so, the scheduler 62 ensures any instructions contained in the annotation are implemented prior to or during the execution of the modified QIF 60. For example, if the annotation indicates that particular error correction parameters are to be used during execution of the modified QIF 60, the scheduler 62 implements the identified error correction parameters for execution of the modified QIF 60. If the annotation indicates that the quantum computing environment of the quantum computing system 12-1 should have certain environmental characteristics, such as being below a certain temperature, or below a certain noise threshold, the scheduler 62 does not cause the modified QIF 60 to be executed until the quantum computing system 12-1 has the identified environmental characteristics.

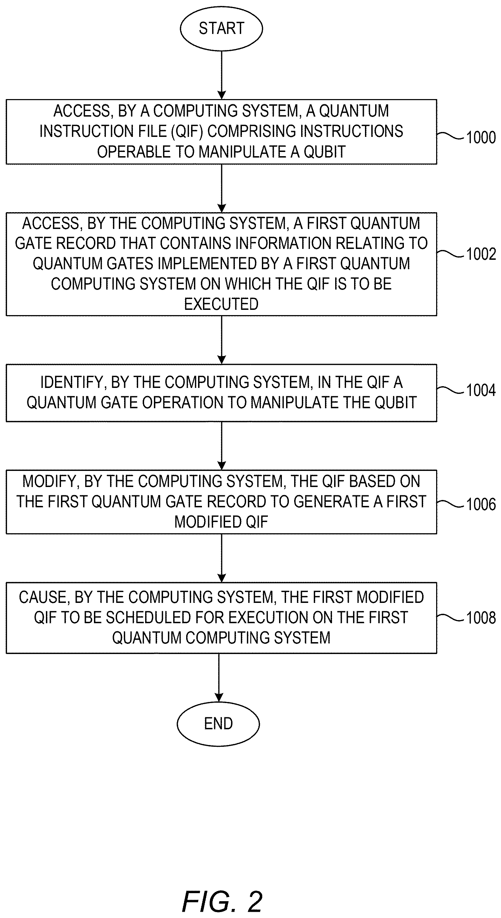

Figure 2 is a flowchart of a method for real-time quantum gate translation based on a quantum gate architecture of a quantum computing system according to some implementations. Figure 2 will be discussed in conjunction with Figure 1. The computing system 20 accesses the QIF 42 comprising the instructions operable to manipulate a qubit (Figure 2, block 1000). The computing system 20 accesses the quantum gate record 44-1 that contains the information relating to quantum gates implemented by the quantum computing system 12-1 on which the QIF 42 is to be executed (Figure 2, block 1002). The computing system 20 identifies in the QIF 42 a quantum gate operation to manipulate the qubit (Figure 2, block 1004). The computing system 20 modifies the QIF 42 based on the first quantum gate record 44-1 to generate the modified QIF 60 (Figure 2, block 1006). The computing system 20 causes the modified QIF 60 to be scheduled for execution on the quantum computing system 12-1 (Figure 2, block 1008).

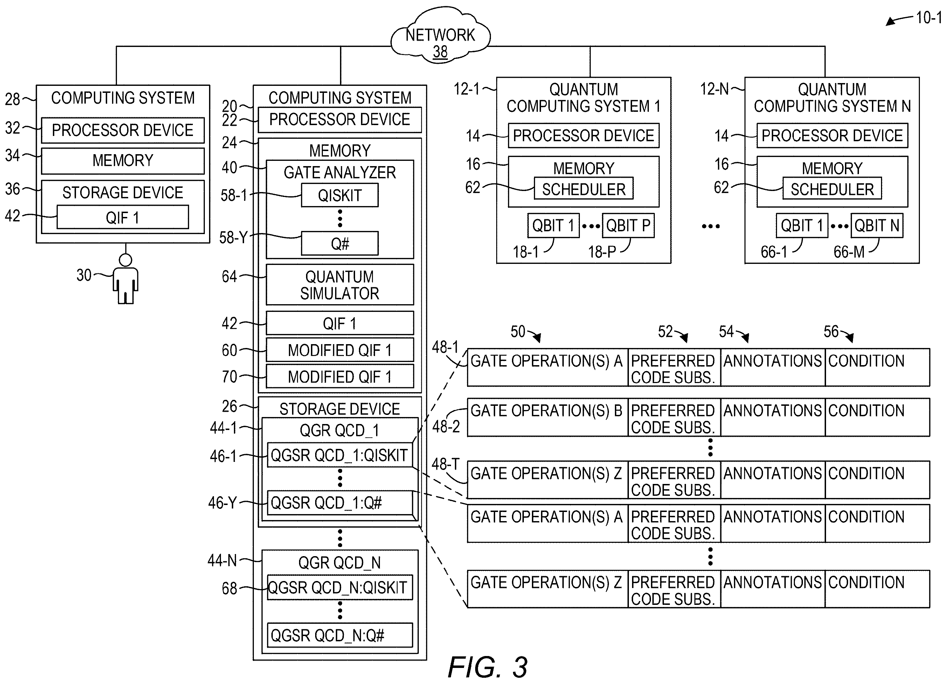

Figure 3 is a block diagram of an environment 10-1 in which real-time quantum gate translation based on a quantum gate architecture of a quantum computing system can be practiced according to other implementations. The environment 10-1 is substantially similar to the environment 10 illustrated in Figure 1 except as otherwise discussed herein. The environment 10-1 includes a plurality of quantum computing systems 12-1 - 12-N (generally, quantum computing systems 12). The quantum computing systems 12-1 - 12-N each have the processor device 14, the memory 16 and the scheduler 62. The quantum computing systems 12-1 - 12-N each implement a plurality of qubits. In this example the quantum computing system 12-N implements a plurality of qubits 66-1 - 66-M.

In this implementation the gate analyzer 40 receives the QIF 42 and determines which quantum computing system 12 of the plurality of quantum computing systems 12 the QIF 42 is to be executed on. The determination may be based on a criterion used by the gate analyzer 40. For example, the gate analyzer 40 may analyze the quantum computing systems 12 and determine which quantum computing system 12 has the lowest current load, or the lowest scheduled task queue depth. The gate analyzer 40 may utilize a load-balancing algorithm to select a particular quantum computing system 12 from the plurality of quantum computing systems 12. In such implementations if the user 30 desires to execute the QIF 42 multiple times, the QIF 42 may be executed on different quantum computing systems 12.

For example, assume that, as described above with regard to Figure 1, the user 30 interacts with the computing system 28 to cause the QIF 42 to be sent to the computing system 20. The gate analyzer 40 accesses the QIF 42. Based on some criterion, the gate analyzer 40 determines that the QIF 42 is to be executed on the quantum computing system 12-1. In response to determining that the QIF 42 is to be executed on the quantum computing system 12-1, the gate analyzer 40 selects the quantum gate record 44-1 that corresponds to the quantum computing system 12-1. The gate analyzer 40 determines that the quantum programming language used in the QIF 42 is the Qiskit quantum programming language, and thus the module 58-1 processes the QIF 42. The module 58-1 accesses the subrecord 46-1 and generates the modified QIF 60, as described above. The gate analyzer 40 causes the modified QIF 60 to be scheduled for execution on the quantum computing system 12-1.

Now assume subsequently the user 30 interacts with the computing system 28 to again cause the QIF 42 to be sent to the computing system 20. The gate analyzer 40 accesses the QIF 42. In this example, based on some criterion, the gate analyzer 40 determines that the QIF 42 is to be executed on the quantum computing system 12-N. The quantum computing systems 12-1 and 12-N have different quantum gate architectures. In response to determining that the QIF 42 is to be executed on the quantum computing system 12-1, the gate analyzer 40 selects the quantum gate record 44-N that corresponds to the quantum computing system 12-N. The gate analyzer 40 determines that the quantum programming language used in the QIF 42 is the Qiskit quantum programming language, and thus the module 58-1 processes the QIF 42. The module 58-1 accesses a subrecord 68 and processes the entries in the subrecord 68 substantially similarly as described above with regard to the subrecord 46-1. The module 58-1 generates a modified QIF 70 that reflect language translations and annotations identified in the subrecord 68. The modified QIF 70 is different from the modified QIF 60. The gate analyzer 40 causes the modified QIF 70 to be scheduled for execution on the quantum computing system 12-N.

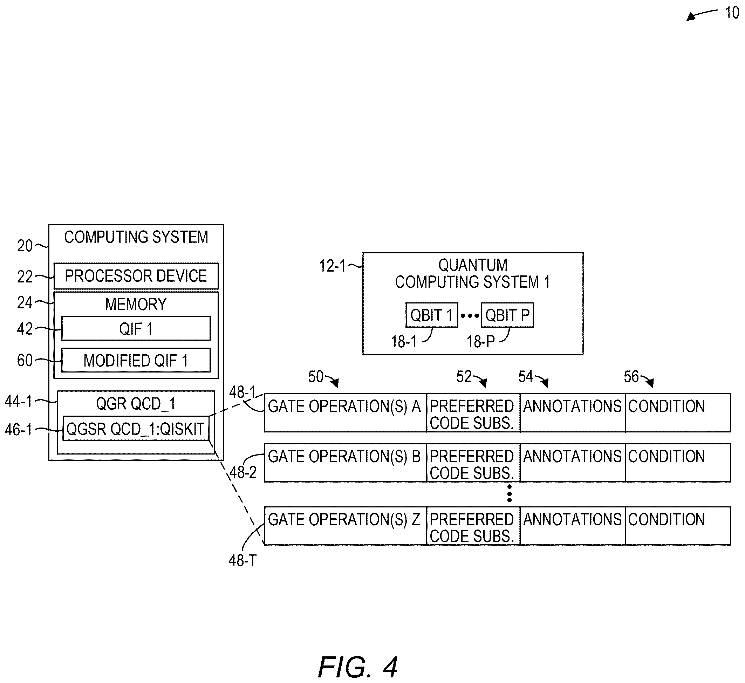

Figure 4 is a simplified block diagram of the environment 10 illustrated in Figure 1 according to one implementation. The environment 10 includes the computing system 20, which in turn includes the memory 24 and the processor device 22 coupled to the memory 24. The processor device 22 is to access the QIF 42 comprising the instructions operable to manipulate a qubit. The processor device 22 is further to access the quantum gate record 44-1 that contains the information, such as the entries 48, relating to quantum gates implemented by the quantum computing system 12-1 on which the QIF 42 is to be executed. The processor device 22 is further to identify in the QIF 42 a quantum gate operation to manipulate the qubit. The processor device 22 is further to modify the QIF 42 based on the quantum gate record 44-1 to generate the modified QIF 60. The processor device 22 is further to cause the modified QIF 60 to be scheduled for execution on the quantum computing system 12-1.

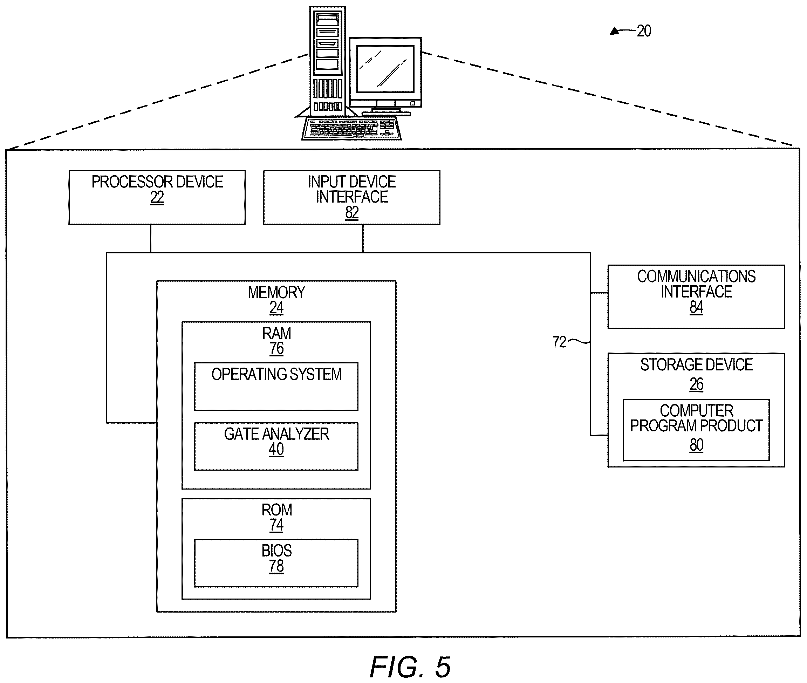

Figure 5 is a block diagram of the computing system 20 suitable for implementing examples according to one example. The computing system 20 may comprise any classical or quantum computing device capable of including firmware, hardware, and/or executing software instructions to implement the functionality described herein. The computing system 20 includes the processor device 22, the system memory 24, and a system bus 72. The system bus 72 provides an interface for system components including, but not limited to, the system memory 24 and the processor device 22. The processor device 22 can be any commercially available or proprietary processor.

The system bus 72 may be any of several types of bus structures that may further interconnect to a memory bus (with or without a memory controller), a peripheral bus, and/or a local bus using any of a variety of commercially available bus architectures. The system memory 24 may include non-volatile memory 74 (e.g., read-only memory (ROM), erasable programmable read-only memory (EPROM), electrically erasable programmable read-only memory (EEPROM), etc.), and volatile memory 76 (e.g., random-access memory (RAM)). A basic input/output system (BIOS) 78 may be stored in the non-volatile memory 74 and can include the basic routines that help to transfer information between elements within the computing system 20. The volatile memory 76 may also include a high-speed RAM, such as static RAM, for caching data.

The computing system 20 may further include or be coupled to a non-transitory computer-readable storage medium such as the storage device 26, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 26 and other drives associated with computer-readable media and computer-usable media may provide non-volatile storage of data, data structures, computer-executable instructions, and the like.

A number of modules can be stored in the storage device 26 and in the volatile memory 76, including an operating system and one or more program modules, such as the gate analyzer 40, which may implement the functionality described herein in whole or in part. All or a portion of the examples may be implemented as a computer program product 80 stored on a transitory or non-transitory computer-usable or computer-readable storage medium, such as the storage device 26, which includes complex programming instructions, such as complex computer-readable program code, to cause the processor device 22 to carry out the steps described herein. Thus, the computer-readable program code can comprise software instructions for implementing the functionality of the examples described herein when executed on the processor device 22. The processor device 22, in conjunction with the gate analyzer 40 in the volatile memory 76, may serve as a controller, or control system, for the computing system 20 that is to implement the functionality described herein.

An operator may also be able to enter one or more configuration commands through a keyboard (not illustrated), a pointing device such as a mouse (not illustrated), or a touch-sensitive surface such as a display device. Such input devices may be connected to the processor device 22 through an input device interface 82 that is coupled to the system bus 72 but can be connected by other interfaces such as a parallel port, an Institute of Electrical and Electronic Engineers (IEEE) 1394 serial port, a Universal Serial Bus (USB) port, an IR interface, and the like. The computing system 20 may also include a communications interface 84, such as an Ethernet transceiver and/or a Wi-Fi transceiver, or the like, suitable for communicating with the network 38 as appropriate or desired.

Individuals will recognize improvements and modifications to the preferred examples of the disclosure. All such improvements and modifications are considered within the scope of the concepts disclosed herein and the claims that follow.

## Claims

1. A method comprising:
accessing, by a computing system, a quantum instruction file, QIF, comprising instructions operable to manipulate a qubit;
accessing, by the computing system, a first quantum gate record that contains information relating to quantum gates implemented by a first quantum computing system on which the QIF is to be executed;
identifying, by the computing system, in the QIF a quantum gate operation to manipulate the qubit;
modifying, by the computing system, the QIF based on the first quantum gate record to generate a first modified QIF; and
causing, by the computing system, the first modified QIF to be scheduled for execution on the first quantum computing system.

2. The method of claim 1, further comprising:
prior to causing the first modified QIF to be scheduled for execution on the first quantum computing system, causing, by the computing system, the first modified QIF to be executed by a quantum simulator;
accessing, by the computing system, output information generated based on the first modified QIF being executed by the quantum simulator; and
based on the output information, causing the first modified QIF to be scheduled for execution on the first quantum computing system.

3. The method of claim 2, wherein the output information comprises a log file.

4. The method of claim 1, wherein modifying the QIF based on the first quantum gate record to generate the first modified QIF comprises replacing a programming instruction identified in the QIF with a different programming instruction in the first modified QIF.

5. The method of claim 1, wherein modifying the QIF based on the first quantum gate record to generate the first modified QIF comprises adding a quantum environment instruction to the first modified QIF that identifies a desired quantum environment characteristic.

6. The method of claim 5, wherein the desired quantum environment characteristic comprises a particular error correction algorithm.

7. The method of claim 5, wherein the desired quantum environment characteristic comprises a particular noise threshold.

8. The method of claim 1, wherein modifying the QIF based on the first quantum gate record to generate the first modified QIF comprises replacing a quantum gate operation identified in the QIF with a plurality of quantum gate operations in the first modified QIF that implements a same result as the quantum gate operation identified in the QIF.

9. The method of claim 1, further comprising:
determining, by the computing system, that the QIF is to be executed on the first quantum computing system of a plurality of quantum computing systems;
wherein accessing the first quantum gate record comprises:
in response to determining that the QIF is to be executed on the first quantum computing system, selecting the first quantum gate record from a plurality of quantum gate records, each quantum gate record corresponding to one of the plurality of quantum computing systems.

10. The method of claim 8, further comprising:
subsequent to causing the first modified QIF to be scheduled for execution on the first quantum computing system, accessing, by the computing system, the QIF;
accessing, by the computing system, a second quantum gate record that contains information relating to quantum gates implemented by a second quantum computing system on which the QIF is to be executed;
identifying, by the computing system, in the QIF, the quantum gate operation to manipulate the qubit;
modifying, by the computing system, the QIF based on the second quantum gate record to generate a second modified QIF, wherein the second modified QIF is different from the first modified QIF; and
causing, by the computing system, the second modified QIF to be scheduled for execution on the second quantum computing system.

11. A computing system, comprising:
a memory; and
a processor device coupled to the memory, configured to carry out the method of any of claims 1 to 10.

12. A non-transitory computer-readable storage medium that includes executable instructions, which, when executed by a processor device, cause the processor device to carry out the method of any of claims 1 to 10.
